# EUROPEAN PATENT APPLICATION

(11) **EP 1 733 605 A2**
(43) Date of publication of application: **20.12.2006**
(21) Application number: 06115443.1
(22) Date of filing: 14.06.2006
(51) Int. Cl.: A01D 41/12, B01D 46/26

(54) **Rotating filter screen assembly**

(30) Priority: 18.06.2005 US 155139
(71) Applicant: Deere & Company, Moline, IL 61265-8098 (US)
(72) Inventor: Keys II, Gary S, Bettendorf, IA 52722 (US); Narayana, Shankar, Davenport, IA 52807 (US)
(74) Representative: Holst, Sönke

(57) **Abstract**

The invention pertains to a rotating filter screen assembly (20) comprising:
a rotating filter screen (22) having an upstream side and a downstream side;
a stationary cleaning chamber (24) mounted on the filter screen assembly (20), the cleaning chamber (24) having an open face adjacent the upstream side of the filter screen (22); and
a vacuum source connected to the cleaning chamber (24) and adapted to remove collected debris from the upstream side of the filter screen (22) as the filter screen rotates relative to the cleaning chamber (24).

An aerodynamic baffle plate (30) offset from the downstream side of the filter screen (22) is proposed to divert air flow toward the downstream side of the filter screen so as to create an area of high pressure air at the open face of the cleaning chamber (24).

## Description

The present invention is directed to a rotating filter screen assembly comprising a rotating filter screen having an upstream side and a downstream side, the filter screen adapted to collect debris on the upstream side from air passing through the filter screen; a stationary cleaning chamber mounted on the filter screen assembly, the cleaning chamber having an open face adjacent the upstream side of the filter screen; and a vacuum source connected to the cleaning chamber and adapted to remove collected debris from the upstream side of the filter screen as the filter screen rotates relative to the cleaning chamber.

The engines of large working vehicles, such as self-propelled agricultural combines, are commonly enclosed. Typically, the enclosures are provided with rotating self-cleaning filter screens through which cooling and combustion air streams are drawn by a downstream engine fan. Heat exchangers are located downstream of the filter screen and include the radiator for cooling the engine, the oil cooler, and the condenser coils for the air conditioning. The rotating filter screen is used to remove debris such as chaff and leaves from the cooling and combustion air streams so that the debris does not block the various heat exchangers or the combustion air filters located downstream of the filter screen.

The rotating filter screen is rotate through a screen cleaner to automatically and continuously provide a clean air flow through the filter screen. Typically, a screen cleaner includes a vacuum cleaning chamber on the upstream side of the screen. The cleaning chamber is pneumatically coupled by a duct to a vacuum source generated by the engine. The duct is coupled to the engine air stream downstream of the heat exchangers for reintroducing the debris collected off the upstream side of the filter screen into the air stream prior to exhaust.

The performance and efficiency of the vacuum cleaning chamber can be increased with a baffle plate on the downstream side of the rotating screen. The cleaning chamber works in conjunction with the vacuum generated by the engine fan to remove collected debris from the upstream side of the filter screen. Generally a flat baffle plate cuts off and diverts the air flow in the vicinity of the cleaning chamber.

However, due to increasing regulatory requirements, such as the Tier 3 emissions requirements, the power and cooling demands on today's engines require an increased air flow to the engines. Also, since today's working vehicles, such as combine harvesters, are larger and operating at faster speeds, the environment around the combine, from which the engine cooling and combustion air is drawn, has more debris. Thus, it is necessary to increase the effectiveness of the vacuum cleaning chamber and to increase the amount of debris removed from the filter screen.

A rotating filter screen assembly is provided for filtering debris from cooling and combustion air provided to an engine system having an engine fan adapted to draw air through the filter screen assembly. The filter screen assembly includes a rotating filter screen having an upstream side and a downstream side. The filter screen is adapted to collect debris on the upstream side from air passing through the filter screen. A stationary cleaning chamber is mounted in the filter screen assembly and has an open face adjacent the upstream side of the filter screen. A vacuum source is connected to the cleaning chamber and is adapted to remove collected debris from the upstream side of the filter screen as the filter screen rotates relative to the cleaning chamber. An aerodynamic baffle plate is offset from the downstream side of the filter screen to divert air flow toward the downstream side of the filter screen so as to create an area of high pressure air at the open face of the cleaning chamber.

In the following, an embodiment of the invention will be discussed based upon the drawings, in which:
Figure 1 is a top view of a self propelled agricultural combine;
Figure 2 is a back perspective view a self-cleaning rotary filter screen assembly according to the invention;
Figure 3 is a cross sectional view through the rotating screen assembly of Figure 2 showing the increased airflow to the cleaning chamber; and
Figure 4 is a schematic of a rotating screen assembly without the present invention and showing the current airflow.

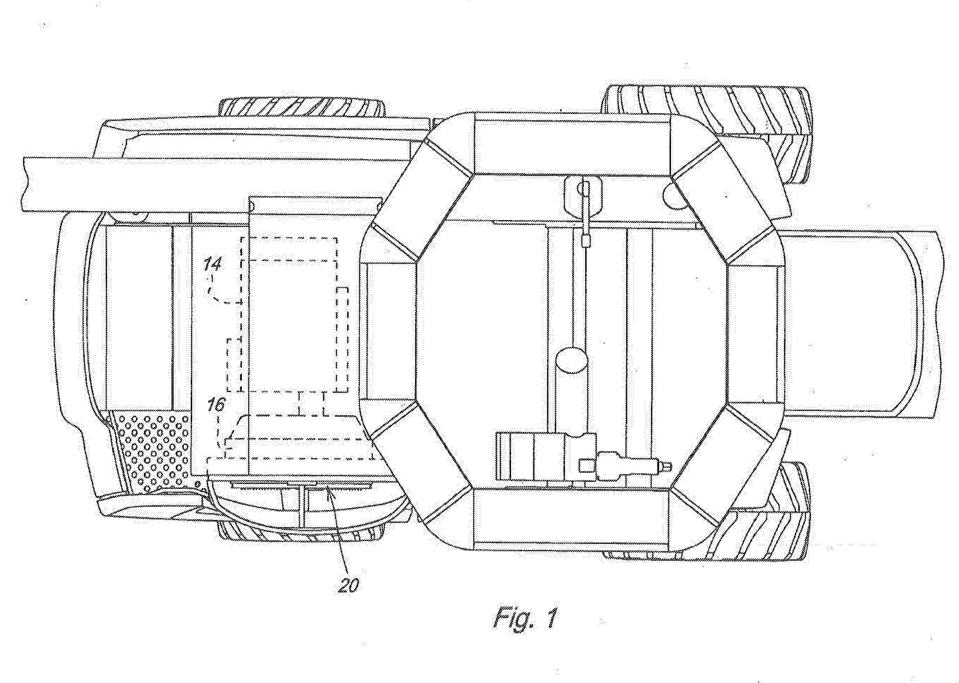

Figure 1 shows a self propelled agricultural combine. An operator controls the combine from a cab enclosed operator station. The combine has an engine 14 at the rear to power various functions of the machine. A heat exchanger package 16 is provided to regulate the temperature of the numerous systems of the combine. The heat exchanger package typically includes a radiator, a hydraulic oil cooler, and an air conditioning condenser, for example. Cooling air for the heat exchangers 16 is commonly drawn in through a rotating filter screen assembly 20 by a fan driven by the engine. The rotary screen assembly 20 filters plant material and debris in the ambient air that would otherwise clog the heat exchangers 16 and reduce their performance. Potentially, plugged heat exchangers could cause the engine or other systems to overheat. Although the present invention is illustrated on an agricultural combine, the present invention could be used on many types of agricultural, industrial, and construction equipment that operate in debris-filled environments.

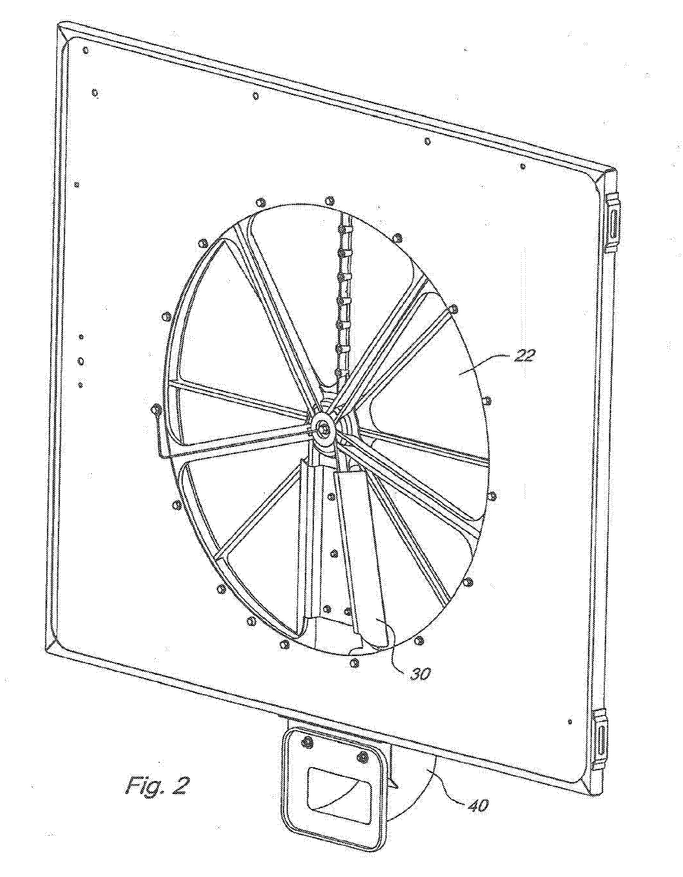

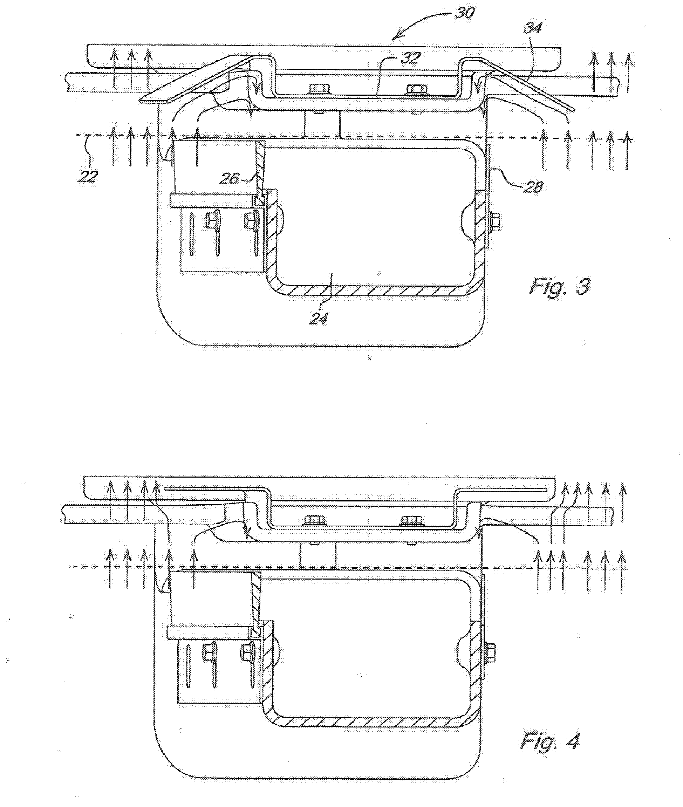

Figures 2 and 3 illustrate a self-cleaning rotary filter screen assembly 20 for use in vehicles such as agricultural combines. The assembly includes a disk shaped rotating filter screen 22 and a stationary vacuum cleaning chamber 24. The filter screen assembly 20 is typically located on the side of the combine.

The filter screen 22 is a flat circular screen having a woven wire mesh. The vacuum cleaning chamber 24 is generally triangular in shape and extends radially across a small portion of the upstream surface of the filter screen 22 from the outer circumferential edge to the center of the circular screen 22. The leading edge of the cleaning chamber 24 often includes a comb 28 having a castellated edge. The castellated edge is provided with a series of notches that cut large debris on the screen into smaller pieces. The trailing edge of the cleaning chamber is provided with a flexible skirt 26 providing a partial seal for the vacuum cleaning chamber 24.

In operation, the filter screen 22 rotates relative to the cleaning chamber 24. The cleaning chamber 24 is thus able to continually clean the complete upstream surface of the filter screen 22 as the screen rotates past. The illustrated self-cleaning rotary filter screen assembly 22 is similar to the one described in US Patent 5,183,487, the disclosure of which is here incorporated by reference. Although the rotating filter screen is illustrated with a stationary cleaning chamber, the present invention may be used with various other configurations where the filter screen and cleaning chamber rotate or move relative to each other.

Figure 3 illustrates the aerodynamic baffle plate 30 of the present invention. The vacuum cleaning chamber 24 is pneumatically coupled with the engine air flow downstream of the heat exchangers 16 by duct 40. This connection creates a low pressure vacuum in the cleaning chamber 24 that draws filtered debris from the upstream surface of the filter screen 22. The vacuum carries the debris through duct 40 and downstream of the heat exchangers 16. The aerodynamic baffle plate 30 is generally triangular in shape and is positioned parallel to and offset from the downstream surface of the filter screen 22. The aerodynamic baffle plate is supported by the filter screen assembly 20.

The flat center portion 32 of the aerodynamic baffle plate substantially covers the transverse width of the cleaning chamber 24. The two additional wing portions 34 are attached at a forward angle to each side of the center potion 32. The wings 34 transversely extend the footprint of the aerodynamic baffle plate 30 beyond the lateral extent of the triangular vacuum cleaning chamber 24. The winged baffle plate 30 improves the cleaning effectiveness of the cleaning chambers by diverting and providing additional air flow across the filter screen to the open face of the vacuum cleaning chamber 24. The aerodynamic baffle plate is offset from the downstream side of the filter screen 22 so as to divert air flow toward the downstream side of the filter screen. The diverted air creates an area of high pressure air along the open face of the vacuum cleaning chamber 24.

The aerodynamic baffle plate has a flat center portion 32 and two wing portions 34 that are angled toward the filter screen 22 and toward the vacuum cleaning chamber 24. The cleaning chamber 24 has a triangular transverse width. The wing portions 34 extend transversely beyond the width of the vacuum cleaning chamber 24 so as to divert addition air to the open face of the cleaning chamber 24.

## Claims

1. A rotating filter screen assembly (20) comprising:
a rotating filter screen (22) having an upstream side and a downstream side, the filter screen (22) adapted to collect debris on the upstream side from air passing through the filter screen (22);
a stationary cleaning chamber (24) mounted on the filter screen assembly (20), the cleaning chamber (24) having an open face adjacent the upstream side of the filter screen (22); and
a vacuum source connected to the cleaning chamber (24) and adapted to remove collected debris from the upstream side of the filter screen (22) as the filter screen rotates relative to the cleaning chamber (24);
**characterized by** an aerodynamic baffle plate (30) offset from the downstream side of the filter screen (22) to divert air flow toward the downstream side of the filter screen so as to create an area of high pressure air at the open face of the cleaning chamber (24).

2. A rotating filter screen assembly (20) according to claim 1 wherein the aerodynamic baffle plate (30) has a flat center portion (32) and two wing portions (34) angled toward the filter screen (22) and toward the cleaning chamber (24).

3. A rotating filter screen assembly (20) according to claim 2 wherein the cleaning chamber (24) has a transverse width and the wing portions (34) extend transversely beyond the width of the cleaning chamber (24).

4. A rotating filter screen assembly (20) according to claim 1 wherein the filter screen (22) is circular and the aerodynamic baffle plate (30) extends radially across the circular screen (22).

5. A harvesting machine comprising an engine (14), an engine fan adapted to draw air through the filter screen assembly (20) for cooling the engine (14) and a rotating filter screen assembly (20) according to one of the preceding claims.
